# EUROPÄISCHE PATENTSCHRIFT

(11) **EP 2 081 269 B1**
(45) Veröffentlichungstag und Bekanntmachung des Hinweises auf die Patenterteilung: **01.01.2014**
(21) Anmeldenummer: 09150495.1
(22) Anmeldetag: 14.01.2009
(51) Int. Cl.: H02G 5/00

(54) **Schienenkasten sowie Verfahren zur Installation eines Schienenkastens in ein Schienenverteilersystem**
Busbar box and method for installing a busbar box in a busbar distribution system
Boîtier à barres collectrices et procédé d'installation d'un boîtier à barres collectrices dans un système de distributeur à barres collectrices

(30) Priorität: 18.01.2008 DE 102008002754
(43) Veröffentlichungstag der Anmeldung: 22.07.2009
(73) Patentinhaber: SCHNEIDER ELECTRIC AUTOMATION GMBH, 63500 Seligenstadt (DE)
(72) Erfinder: Adam, Dietmar, 30952, Ronnenberg (DE); Reuter, Dieter, 04158, Leipzig (DE)
(74) Vertreter: Stoffregen, Hans-Herbert

(56) Entgegenhaltungen:
- WO-A-03/069747
- US-A- 5 821 464

## Beschreibung

Die Erfindung bezieht sich auf einen Schienenkasten zur Verbindung beabstandeter Enden von Schienensträngen eines elektrische Energie verteilendenSchienenverteilersystems sowie auf ein Verfahren zur Installation eines Schienenkastens in ein Schienen-verteilersystem.

Ein Schienenkasten oben genannter Art ist beispielsweisen in der DE-U-6607093 und US 5821464 beschrieben.

Bei Projektabwicklung und Montage von Schienenverteileranlagen wird häufig ein Schienenkasten pro Strangsegment als Anpassungsschienenkasten benötigt, um Maßdifferenzen im Millimeterbereich des Baukörpers auszugleichen. Die Länge des Anpas-sungsschienenkastens ergibt sich dann als Maß der Lücke im ansonsten fertig montierten Schienenstrang und wird auf der Baustelle eingemessen.

Das eingemessene Maß des Anpassungsschienenkastens wird dann beim Hersteller bestellt, um es möglichst schnell auf die Baustelle zur Fertigstellung der Schienenvertei-leranlage geliefert zu bekommen. Aufgrund der meist langen Bestell- und Liefeikette (Elektrogroßhandel, Hersteller, Hersteller interne Beschaffungsorganisationen, Werk, Logistikcenter) ist die Fertigstellung sehr häufig verzögert. Werden Fertigstellungstermine der Bauherren nicht eingehalten, führt das zu entsprechenden wirtschaftlichen Nachteilen, die mitunter sehr groß sind.

Davon ausgehend liegt der vorliegenden Erfindung das Problem zu Grunde einen Schienenkasten der eingangs genannten Art dahingehend weiterzubilden, dass die Abwicklung und schnellere Fertigstellung von Schienenverteiler Projekten auf der Baustelle vereinfacht wird.

Die Aufgabe wird unter anderem dadurch gelöst, dass ein auf der Baustelle anpassbarer Anpassschienenkasten zur Verfügung gestellt wird. Dieser zeichnet sich vorzugsweise dadurch aus, dass innerhalb eines Gehäuses zwei auf einem Schlitten verstellbare Verbindungsstellen (Verbindungskontaktblöcke) eingesetzt sind. Vorzugsweise kann ein Mittenabstand der Verbindungskontaktblöcke auf der Baustelle auf das Maß eingestellt werden, welches sich als Maß der Lücke im ansonsten fertig montierten Schienenstrang ergibt.

Der Anpassschienenkasten wird dann in die Lücke im ansonsten fertig montierten Schienenstrang eingesetzt. Um die elektrische Verbindung zwischen den maßlich eingestellten Verbindungskontaktblöcken zu erstellen, werden die im Maximalmaß mitgelieferten Leiterstäbe (L1...L3, N, PE) durch den Installateur vor Ort entsprechend eingekürzt und vorzugsweise zusammen mit ein oder zwei Stützen (zum Erreichen der Kurz-Schlussfestigkeit) in den Anpassschienenkasten eingesetzt. Letztendlich wird das Gehäuse des Anpassschienenkastens geschlossen. Die Lücke im Schienenstrang ist geschlossen und der Schienenstrang kann in Betrieb genommen werden.

Durch den vorort auf der Baustelle anpassbaren Anpassschienenkasten, kann ein Schienenstrang durchgängig montiert und fertig gestellt werden. Der Anpassschienenkasten kann direkt bei der ersten Bestellung mit bestellt werden. Daraus resultiert eine Vereinfachung der Abwicklung und eine schnellere Fertigstellung von Schienenverteiler Projekten auf der Baustelle.

Mit einem auf der Baustelle vom Installateur in der Länge anpassbaren Schienenkasten pro Strangsegment werden:
■ Zeit und Kosten für die Beschaffung und Logistik vermieden
■ Im Herstellwerk werden Produktionsprozesse kontinuierlicher, da keine eiligen Anpassschienenkästen in die laufende Produktion eingeschoben werden müssen
■ Kosten für Express-Sondertransporte werden vermieden
■ Fertigstellungstermine werden planbarer, sicherer und vor allen kürzer, was nachfolgenden Gewerke die elektrische Energie zur Arbeit und Inbetriebnahme benötigen Zeit- und Kostenvorteile bringt
■ Ggf werden Vertragsstrafen für nicht eingehaltene Fertigstellungstermine vermieden

Der auf der Baustelle anpassbare Anpassschienenkasten bietet attraktive wirtschaftliche Vorteile die oben beschrieben sind, sowie einen einzigartigen Wettbewerbsvorteil, da durch den anpassbaren Schienenkasten mehr Flexibilität und Sicherheit entstehen. Installateure, die bisher eine Kabelverteileranlage installiert haben, da Zeit und Kosten für die Beschaffung von werkseitig produzierten Anpassschienenkästen für Schienenverteileranlagen zu aufwändig waren, können mit dieser zusätzlichen Flexibilität und Sicherheit überzeugt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine perspektivische Darstellung eines Schlenenverteilersystems mit Schienenkasten und Schienenstrang,
- Fig. 2: eine perspektivische Darstellung eines Schienenverteilersystems mit geöffnetem Schienenkasten und Schienenstrang,
- Fig. 3a,b,c: eine Draufsicht sowie Seitenansichten des Schienenkastens mit Schienenstrang.

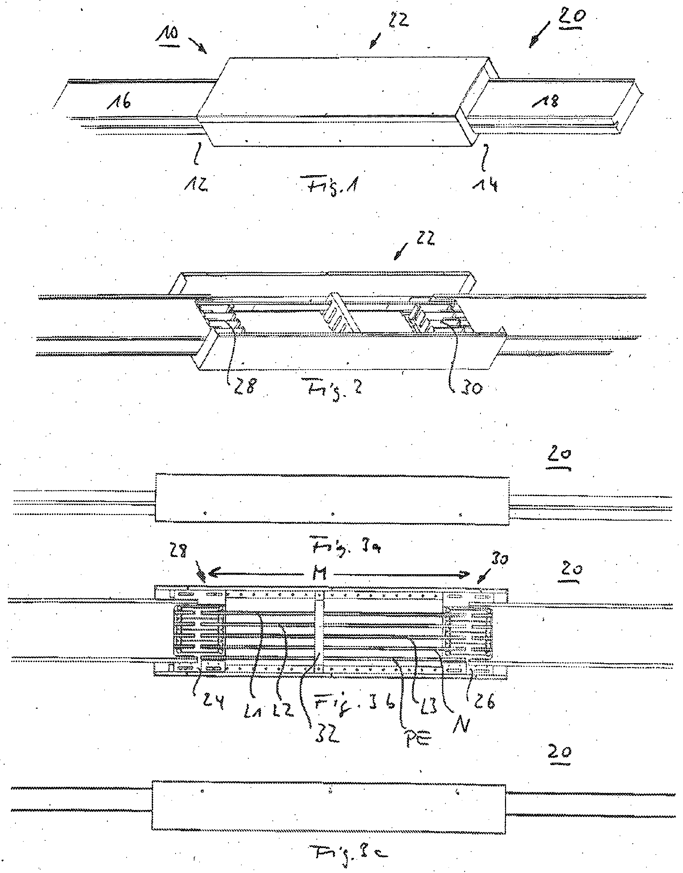

Fig 1 zeigt einen Schienenkasten 10 zur Verbindung beabstandeter Enden 12, 14 von Schienensträngen 16, 18 eines elektrische Energie verteilenden Schienenverteilersystems 20.

Der Schienenkasten 10 ist als auf der Baustelle anpassbarer Anpassschienenkasten 10 ausgebildet. Dieser zeichnet sich vorzugsweise dadurch aus, dass innerhalb eines Gehäuses 22 zwei auf einem Schlitten 24, 26 verstellbare Verbindungsstellen 28, 30 (Verbindungskontaktblöcke) eingesetzt sind. Vorzugsweise kann ein Mittenabstand M der Verbindungskontaktblöcke 28, 30 auf der Baustelle auf das Maß eingestellt werden, welches sich als Maß der Lücke im ansonsten fertig montierten Schienenstrang 20 ergibt.

Der Anpassschienenkasten 10 wird dann in die Lücke im ansonsten fertig montierten Schienenstrang 20 eingesetzt. Um die elektrische Verbindung zwischen den maßlich eingestellten Verbindungskontaktblöcken 28, 30 zu erstellen, werden die im Maximalmaß mitgelieferten Leiterstäbe (L1...L3, N, PE) durch den Installateur vor Ort entsprechend eingekürzt und vorzugsweise zusammen mit ein oder zwei Stützen 32 (zum Erreichen der Kurzsschlussfestigkeit) in den Anpassschienenkasten eingesetzt. Letztendlich wird das Gehäuse 22 des Anpassschienenkastens geschlossen. Die Lücke im Schienenstrang ist geschlossen und der Schienenstrang kann in Betrieb genommen werden.

## Patentansprüche

1. Schienenkasten (10) zur Verbindung beabstandeter Enden (12, 14) von Schienensträngen (16, 18) eines elektrische Energie verteilenden Schienenverteilersystems (20),
**dadurch gekennzeichnet,**
**dass** der Schienenkasten (10) als ein vor Ort anpassbarer Anpassschienenkasten ausgebildet ist, dass innerhalb eines Gehäuses (22) zwei auf jeweils einem Schlitten (24, 26) verstellbare Verbindungsstellen (28, 30) eingesetzt sind, in welche Leiterstäbe (L1, L2, L3, N, PE) der Schienenstränge (16, 18) eingreifen und dass die Verbindungsstellen (28, 30) innerhalb des Schienenkastens (10) über Leiterstäbe (L1, L2, L3, N, PE) verbindbar sind.

2. Schienenkasten nach Anspruch 1,
**dadurch gekennzeichnet,**
**dass** die zwischen den Verbindungsstellen (28, 30) verlaufenden Leiterstäbe (L1, L2, L3, N, PE) durch zumindest eine Stütze (32) zueinander beabstandet angeordnet sind.

3. Verfahren zur Verbindung von in einem Abstand (M) beabstandeter Enden (12, 14) von Schienensträngen (16, 18) eines elektrische Energie verteilenden Schienenverteilersystems (20),
**dadurch gekennzeichnet,**
**dass** der Schienenkasten (10) vor Ort an den Abstand (M) der Enden (12, 14) der Schienenstränge (16, 18) angepasst wird, wobei innerhalb eines Gehäuses (22) zwei durch jeweils einen Schlitten (24, 26) verstellbare Verbindungsstellen (28, 30) mit jeweiligen Enden (12, 14) der Schienenstränge (16, 18) verbunden werden und wobei entsprechend gekürzte Leiterstäbe (L1, L2, L3, N, PE) zur Herstellung einer elektrischen Verbindung innerhalb des Schienenkastens (10) zwischen die Verbindungsstellen (28, 30) eingesetzt werden.

## Claims

1. Busbar box (10) for connecting spaced-apart ends (12, 14) of busbar sections (16, 18) of a busbar distribution system (20) distributing electric power,
wherein
the busbar box (10) is designed as an adjusting busbar box adjustable on the spot, two connecting points (28, 30) adjustable on a slide (24, 26) respectively are provided inside a housing (22) and engage with conductor rods (L1, L2, L3, N, PE) of the busbar sections (16, 18), and the connecting points (28, 30) inside the busbar box (10) are connectable by conductor rods (L1, L2, L3, N, PE).

2. Busbar box according to Claim 1,
wherein
the conductor rods (L1, L2, L3, N, PE) between the connecting points (28, 30) are arranged at a distance from one another by at least one separator (32).

3. Method for connecting ends (12, 14), spaced at a distance (M) from one another, of busbar sections (16, 18) of a busbar distribution system (20) distributing electric power,
wherein
the busbar box (10) is adjusted on the spot to the distance (M) between the ends (12, 14) of the busbar sections (16, 18), with two connecting points (28, 30) adjustable by a slide (24, 26) respectively being connected inside a housing (22) to the respective ends (12, 14) of the busbar sections (16, 18), and with appropriately shortened conductor rods (L1, L2, L3, N, PE) being inserted to make an electrical connection between the connecting points (28, 30) inside the busbar box (10).

## Revendications

1. Boîtier à barres collectrices (10) destiné à relier des extrémités (12, 14) non jointives de faisceaux de barres (16, 18) d'un système distributeur à barres collectrices (20) distribuant de l'énergie électrique,
**caractérisé en ce**
**que** le boîtier à barres collectrices (10) est conçu en tant que boîtier à barres collectrices adaptatif pouvant être adapté sur site, qu'à l'intérieur d'un boîtier (22) sont insérés deux points de jonction (28, 30) respectivement réglables sur un coulisseau (24, 26) et dans lesquels s'engagent des tiges conductrices (L1, L2, L3, N, PE) des faisceaux de barres (16, 18), et que les points de jonction (28, 30) peuvent être reliés à l'intérieur du boîtier à barres collectrices (10) par des tiges conductrices (L1, L2, L3, N, PE).

2. Boîtier à barres collectrices selon la revendication1,
**caractérisé en ce**
**que** les tiges conductrices (L1, L2, L3, N, PE) s'étendant entre les points de jonction (28, 30) sont disposées en étant tenues à distance les unes des autres par au moins un séparateur (32).

3. Procédé pour relier les extrémités (12, 14) se trouvant à une distance (M) les unes des autres, d'un faisceaux de barres (16, 18) d'un système distributeur à barres collectrices (20) distribuant de l'énergie électrique,
**caractérisé en ce**
**que** le boîtier à barres collectrices (10) est adapté sur site à la distance (M) entre les extrémités (12, 14) des faisceaux de barres (16, 18), sachant qu'à l'intérieur d'un boîtier (22), deux points de jonction (28, 30) respectivement réglables par un coulisseau (24, 26) sont reliés aux extrémités respectives (12, 14) des faisceaux de barres (16, 18), et que des tiges conductrices (L1, L2, L3, N, PE) raccourcies en conséquence sont utilisées pour établir une liaison électrique entre les points de jonction (28, 30) à l'intérieur du boîtier à barres collectrices (10).
